# EUROPEAN PATENT APPLICATION

(11) **EP 4 711 058 A1**
(43) Date of publication of application: **18.03.2026**
(21) Application number: 24825532.5
(22) Date of filing: 29.03.2024
(51) Int. Cl.: B22D 11/124, B21B 45/02

(54) **METHOD FOR ESTIMATING PHYSICAL QUANTITY DISTRIBUTION OF OBJECT, METHOD FOR PRODUCING OBJECT, METHOD FOR SETTING PRODUCTION CONDITION, METHOD FOR DEVELOPING PRODUCTION PROCESS, METHOD FOR GENERATING MACHINE LEARNING MODEL, PROGRAM FOR ESTIMATING PHYSICAL QUANTITY DISTRIBUTION OF OBJECT, AND DEVICE FOR ESTIMATING PHYSICAL QUANTITY DISTRIBUTION OF OBJECT**

(30) Priority: 22.06.2023 JP 2023102322
(71) Applicant: JFE Steel Corporation, Tokyo, 100-0011 (JP)
(72) Inventor: MARUYAMA, Jumpei, Tokyo 100-0011 (JP)
(74) Representative: Hoffmann Eitle
(86) International application number: PCT/JP2024/012968
(87) International publication number: WO 2024/262122

(57) **Abstract**

A method for estimating a physical quantity distribution of an object is a method for estimating a physical quantity distribution of an object when a coolant is sprayed from a spray nozzle to cool the object, the method including: a heat dissipation amount acquisition step of acquiring information regarding a heat dissipation amount from the object by the coolant by inputting a plurality of flow velocities of the coolant in a normal direction with respect to the object and a plurality of flow velocities of the coolant in a tangential direction with respect to the object to a machine learning model; and a physical quantity distribution calculation step of calculating a physical quantity distribution of at least one of a surface of the object and inside the object, using the heat dissipation amount as a boundary condition.

## Description

### Field

The present invention relates to a method for estimating a physical quantity distribution of an object, a method for manufacturing an object, a method for setting a manufacturing condition, a method for developing a manufacturing process, a method for generating a machine learning model, a program for estimating a physical quantity distribution of an object, and an apparatus for estimating a physical quantity distribution of an object. Background

In a process of cooling a metal material, it is often that a coolant is sprayed using a spray nozzle. In this method, it is difficult to evenly cool an object to be cooled due to its characteristic in that the coolant is directly sprayed. Uneven cooling increases the risk of defects such as cracks in the metal material, and thus, it is required to accurately predict a temperature distribution (heat dissipation amount distribution) and optimize a cooling method.

For example, Non Patent Literature 1 discloses a technology for calculating a temperature distribution from a relational expression obtained by a cooling experiment using a distribution of water amount density, which represents a flow rate per unit area immediately below a spray. In addition, Non Patent Literature 2 discloses a technology for analyzing a flow of a coolant by the MPS method, which is a type of particle method, and calculating a temperature distribution using a result of the analysis. In addition, Patent Literature 1 discloses a technology for calculating a temperature distribution by analyzing a flow of a coolant on a surface of a metal material through a fluid analysis and substituting the obtained flow-related parameters into a heat transfer coefficient estimation equation.

### Citation List

### Patent Literature

Patent Literature 1: JP 2013-134110 A

### Non Patent Literature

Non Patent Literature 1: "Cooling Technology in Iron and Steel Manufacturing Process", The Iron and Steel Institute of Japan, Report of the Cooling Technology Research Subcommittee, 1988
Non Patent Literature 2: Hakuko Yamazaki et al., "Analysis of Spray Water Behavior in Secondary Cooling of Continuous Casting Using Particle Method", Iron and Steel Institute of Japan, Tetsu-to-Hagane, Vol. 99, 2013

### Summary

### Technical Problem

The temperature distribution calculated by the method of Non Patent Literature 1 can be accurate immediately below the spray, but it is not possible to take into account the heat dissipation amount caused by the flow of the coolant on the surface of the metal material, such as interference between a plurality of sprays, dripping water, or pooled water. In particular, when the flow rate per spray is high or the number of sprays is large, the amount of the coolant also increases, and the heat dissipation amount accompanying the flow of the coolant also increases, resulting in a deviation from the actual phenomenon.

In the method of Non Patent Literature 2, the heat dissipation amount accompanying the flow of the coolant can also be evaluated, making it possible to obtain a temperature distribution closer to the actual phenomenon than in Non Patent Literature 1. However, in the method of Non Patent Literature 2, a temperature distribution is calculated from the same estimation formula as in Non Patent Literature 1, using only the water amount density distribution obtained by the analysis. In reality, there are factors other than the water amount density distribution that affect the heat dissipation amount, and thus, there is still room for improvement in the accuracy of predicting the heat dissipation amount.

Unlike Non Patent Literature 2, the method of Patent Literature 1 uses flow parameters other than the water amount density, making it possible to make a prediction taking into account the boiling form. However, since the flow parameters used in Patent Literature 1 are highly nonlinear, it is difficult to establish an accurate estimation formula that corresponds to various situations, and the implementation costs are high.

The present invention has been made in view of the above, and an object thereof is to provide a method for estimating a physical quantity distribution of an object, a method for manufacturing an object, a method for setting a manufacturing condition, a method for developing a manufacturing process, a method for generating a machine learning model, a program for estimating a physical quantity distribution of an object, and an apparatus for estimating a physical quantity distribution of an object capable of estimating a temperature distribution with high accuracy when the object is cooled using a spray nozzle. Solution to Problem
(1) To solve the problem and achieve the object, a method for estimating a physical quantity distribution of an object according to the present invention is the method for estimating the physical quantity distribution of the object when a coolant is sprayed from a spray nozzle to cool the object. The method includes: a heat dissipation amount acquisition step of acquiring information regarding a heat dissipation amount from the object by the coolant by inputting a plurality of flow velocities of the coolant in a normal direction with respect to the object and a plurality of flow velocities of the coolant in a tangential direction with respect to the object to a machine learning model; and a physical quantity distribution calculation step of calculating a physical quantity distribution of at least one of a surface of the object and inside the object, using the heat dissipation amount as a boundary condition.
(2) Moreover, in the method for estimating the physical quantity distribution of the object according to above (1), in the heat dissipation amount acquisition step, a heat transfer coefficient may be output from the machine learning model as the information regarding the heat dissipation amount, and the heat dissipation amount may be calculated from the heat transfer coefficient.
(3) Moreover, in the method for estimating the physical quantity distribution of the object according to above (1) or (2), the machine learning model may be trained by performing machine learning using teacher data such that, when the plurality of flow velocities of the coolant in the normal direction with respect to the object and the plurality of flow velocities of the coolant in the tangential direction with respect to the object are input as input values, the information regarding the heat dissipation amount from the object by the coolant is output as an output value.
(4) Moreover, in the method for estimating the physical quantity distribution of the object according to any one of above (1) to (3), the physical quantity may be a temperature or a solidification.
(5) Moreover, a method for manufacturing an object according to the present invention includes: estimating a physical quantity distribution of the object in a predetermined step using the method for estimating the physical quantity distribution of the object according to any one of above (1) to (4); and controlling a manufacturing parameter related to manufacturing of the object based on the estimated physical quantity distribution of the object.
(6) Moreover, a method for setting a manufacturing condition according to the present invention is the method for setting the manufacturing condition for one or more predetermined steps included in a manufacturing method for manufacturing an object. The method includes: estimating a physical quantity distribution of the object in the predetermined steps using the method for estimating the physical quantity distribution of the object according to any one of above (1) to (4); and setting a manufacturing condition for the predetermined steps based on the estimated physical quantity distribution of the object.
(7) Moreover, a method for developing a manufacturing process according to the present invention is the method for developing the manufacturing process for one or more predetermined steps included in a manufacturing method for manufacturing an object. The method includes: estimating a physical quantity distribution of the object in the predetermined steps using the method for estimating the physical quantity distribution of the object according to any one of above (1) to (4); and developing a manufacturing process for the predetermined steps based on the estimated physical quantity distribution of the object.
(8) Moreover, a method for generating a machine learning model according to the present invention includes: by using teacher data in which a plurality of flow velocities of a coolant for cooling an object in a normal direction with respect to the object and a plurality of flow velocities of the coolant for cooling the object in a tangential direction with respect to the object are set as input values, and information regarding a heat dissipation amount from the object by the coolant is set as an output value, generating, by machine learning, a model in which the plurality of flow velocities of the coolant in the normal direction with respect to the object and the plurality of flow velocities of the coolant in the tangential direction with respect to the object are used as input values and the information regarding a heat dissipation amount from the object by the coolant is used as an output value.
(9) Moreover, a program for estimating a physical quantity distribution of an object according to the present invention is the program for estimating the physical quantity distribution of the object when a coolant is sprayed from a spray nozzle to cool the object, the program causing a computer to function as: a heat dissipation amount acquisition unit configured to acquire information regarding a heat dissipation amount from the object by the coolant by inputting a plurality of flow velocities of the coolant in a normal direction with respect to the object and a plurality of flow velocities of the coolant in a tangential direction with respect to the object to a machine learning model; and a physical quantity distribution calculation unit configured to calculate a physical quantity distribution of at least one of a surface of the object and inside the object, using the heat dissipation amount as a boundary condition.
(10) Moreover, an apparatus for estimating a physical quantity distribution of an object according to the present invention is the apparatus for estimating the physical quantity distribution of the object when a coolant is sprayed from a spray nozzle to cool the object. The apparatus includes: a heat dissipation amount acquisition unit including a machine learning model, and configured to acquire information regarding a heat dissipation amount from the object by the coolant by inputting a plurality of flow velocities of the coolant in a normal direction with respect to the object and a plurality of flow velocities of the coolant in a tangential direction with respect to the object to the machine learning model; and a physical quantity distribution calculation unit configured to calculate a physical quantity distribution of at least one of a surface of the object and inside the object, using the heat dissipation amount as a boundary condition.
(11) Moreover, in the apparatus for estimating the physical quantity distribution of the object according to above (10), the physical quantity may be a temperature or a solidification.
(12) Moreover, in the method for setting the manufacturing condition according to above (6), the object may be a steel material, the physical quantity may be a temperature, and the predetermined step may be secondary cooling during continuous casting or rapid cooling during hot rolling.
(13) Moreover, in the method for developing the manufacturing process according to above (7), the object may be a steel material, the physical quantity may be a temperature, and the predetermined step may be secondary cooling during continuous casting or rapid cooling during hot rolling.
(14) Moreover, a recording medium according to the present invention is the recording medium that records a program for estimating a physical quantity distribution of an object, the program causing a computer to function as: a heat dissipation amount acquisition unit configured to acquire information regarding a heat dissipation amount from the object by the coolant by inputting a plurality of flow velocities of the coolant in a normal direction with respect to the object and a plurality of flow velocities of the coolant in a tangential direction with respect to the object to a machine learning model; and a physical quantity distribution calculation unit configured to calculate a physical quantity distribution of at least one of a surface of the object and inside the object, using the heat dissipation amount as a boundary condition.
(15) Moreover, a recording medium according to the present invention is the recording medium that records a program for generating a machine learning model, the program causing a computer to function as: by using teacher data in which a plurality of flow velocities of a coolant for cooling an object in a normal direction with respect to the object and a plurality of flow velocities of the coolant for cooling the object in a tangential direction with respect to the object are set as input values, and information regarding a heat dissipation amount from the object by the coolant is set as an output value, a unit configured to generate, by machine learning, a model in which the plurality of flow velocities of the coolant in the normal direction with respect to the object and the plurality of flow velocities of the coolant in the tangential direction with respect to the object are used as input values and the information regarding a heat dissipation amount from the object by the coolant is used as an output value.

### Advantageous Effects of Invention

The method for estimating a physical quantity distribution of an object, the method for manufacturing an object, the method for setting a manufacturing condition, the method for developing a manufacturing process, the method for generating a machine learning model, the program for estimating a physical quantity distribution of an object, and the apparatus for estimating a physical quantity distribution of an object according to the present invention are capable of estimating a temperature distribution with high accuracy when the object is cooled using a spray nozzle.

### Brief Description of Drawings

FIG. 1 is a schematic diagram illustrating a configuration for realizing a temperature distribution estimation apparatus for metal material and a machine learning model generation apparatus according to an embodiment.
FIG. 2 is a schematic diagram illustrating a spray nozzle used in a process of cooling a metal material.
FIG. 3 is a graph comparing results of predicting heat transfer coefficients between a case where a flow velocity in a normal direction of a coolant is used as teacher data for a machine learning model and a case where a flow velocity in a normal direction of a coolant is not used as teacher data for a machine learning model.
FIG. 4 is a flowchart illustrating a flow of a method for generating a machine learning model according to an embodiment.
FIG. 5 is a flowchart illustrating a flow of a teacher data creation step in the method for generating a machine learning model according to an embodiment.
FIG. 6 is a flowchart illustrating a flow of a temperature distribution estimation method for metal material according to an embodiment.
FIG. 7 is a flowchart illustrating a flow of a first example of a heat dissipation amount acquisition step in the temperature distribution estimation method for metal material according to the embodiment.
FIG. 8 is a flowchart illustrating a flow of a second example of a heat dissipation amount acquisition step in the temperature distribution estimation method for metal material according to the embodiment.

### DESCRIPTION OF EMBODIMENTS

A method for estimating a physical quantity distribution of an object, a method for manufacturing an object, a method for setting a manufacturing condition, a method for developing a manufacturing process, a method for generating a machine learning model, a program for estimating a physical quantity distribution of an object, and an apparatus for estimating a physical quantity distribution of an object according to an embodiment of the present invention will be described with reference to the drawings.

Note that the components in the following embodiments include those that are interchangeable by a person skilled in the art or substantially identical. In the following description, the description of the identical or overlapping portions will be omitted or simplified as appropriate. In the drawings referred to below, identical or overlapping portions are denoted by the same reference signs.

### [First Embodiment]

### (Temperature Distribution Estimation Apparatus and Model Generation Apparatus)

A temperature distribution estimation apparatus for a metal material according to an embodiment estimates a temperature distribution on a surface of and/or inside a metal material in a process of cooling the metal material. Examples of the "process of cooling the metal material" include a process of secondarily cooling a cast piece in continuously casting a steel material, a process of rapidly cooling a steel sheet in hot-rolling the steel sheet, and the like. In addition, a machine learning model generation apparatus (hereinafter, "model generation apparatus") according to the embodiment generates a machine learning model (trained model) to be used when the temperature distribution is estimated.

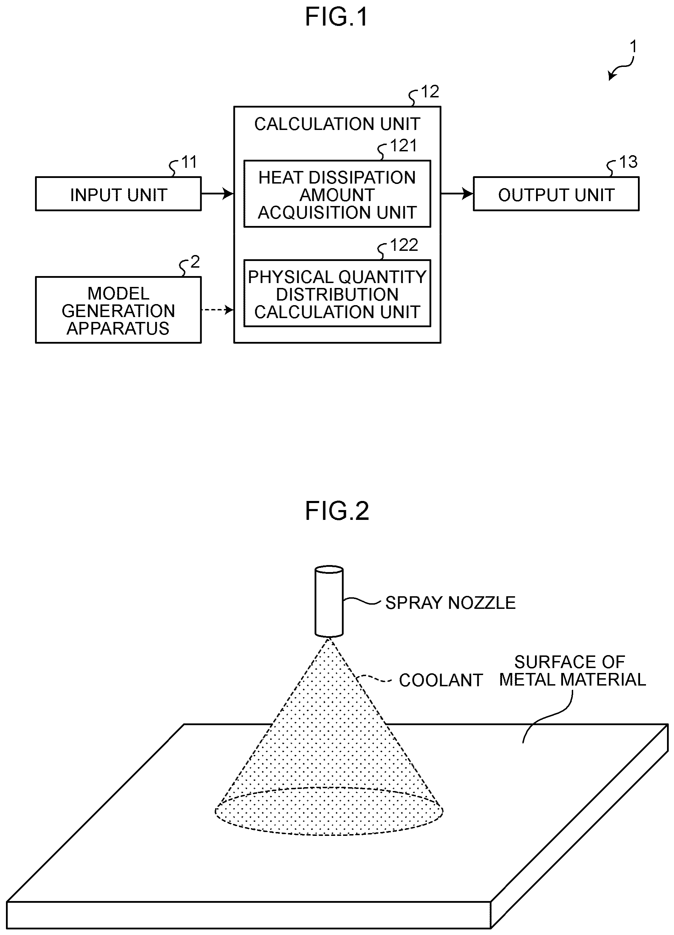

The temperature distribution estimation apparatus and the model generation apparatus for a metal material according to the embodiment can be realized by, for example, a temperature distribution estimation apparatus 1 and a model generation apparatus 2 as illustrated in FIG. 1. The temperature distribution estimation apparatus 1 includes an input unit 11, a calculation unit 12, and an output unit 13.

Note that, although the temperature distribution estimation apparatus 1 and the model generation apparatus 2 are illustrated as separate apparatuses in FIG. 1, for example, the function of the model generation apparatus 2 may be performed by the calculation unit 12 of the temperature distribution estimation apparatus 1, and a "model generation unit" may be provided in the calculation unit 12. Hereinafter, the model generation apparatus 2 will be described first, and then each component of the temperature distribution estimation apparatus 1 will be described.

The model generation apparatus 2 generates a machine learning model to be used for estimating a temperature distribution. In the generation of the machine learning model, parameters indicating a flow state of a coolant, for example, on a surface of a metal material when the coolant is sprayed from a spray nozzle, as illustrated in FIG. 2, are prepared in advance.

The "flow state of the coolant" includes, for example, a flow velocity of the coolant on the surface of the metal material. In addition, the flow state of the coolant on the surface of the metal material may include, for example, at least one of a density, a pressure, a temperature, and a water amount density of the coolant, a measured temperature of the metal material, and a physical quantity calculated using them, in addition to the flow velocity of the coolant.

In addition, the "flow velocity of the coolant" specifically refers to a plurality of flow velocities of the coolant in a normal direction with respect to the surface of the metal material and a plurality of flow velocities of the coolant in a tangential direction with respect to the surface of the metal material. Further, "the plurality of flow velocities" specifically refers to flow velocities at a plurality of coordinates (positions) on the surface of the metal material.

Here, the flow velocity of the coolant is difficult to measure experimentally because it occurs in a non-linear flow field formed by collision and interference of the coolant sprayed from the spray nozzle with the surface of the metal material or a coolant sprayed from another spray nozzle. Therefore, it is desirable to acquire a flow velocity at each coordinate on a surface of a steel sheet from a flow field of a coolant by performing a fluid analysis of the coolant in advance. The fluid analysis method is not particularly limited, but it is desirable to use a method capable of analyzing the flow of the coolant including a gas-liquid interface, such as a volume of fluid (VOF) method, a particle method, and a phase field method.

Using teacher data prepared in advance, the model generation apparatus 2 generates, by machine learning, a model in which a flow state of a coolant on a surface of a metal material is used as an input value, and information regarding a heat dissipation amount from the metal material by the coolant is used as an output value.

The "teacher data" refers to a data set in which a plurality of flow velocities of the coolant in the normal direction with respect to the surface of the metal material and a plurality of flow velocities of the coolant in the tangential direction with respect to the surface of the metal material are set as input values, and information regarding a heat dissipation amount from the metal material by the coolant is set as an output value.

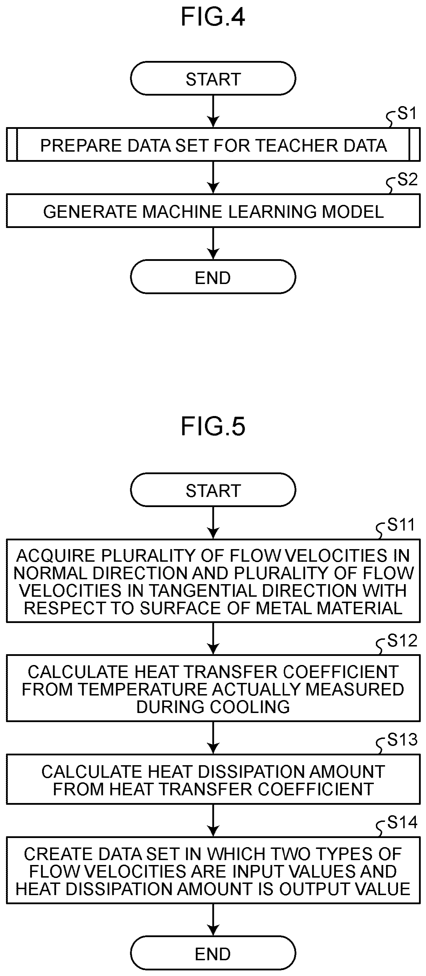

In addition, the "information regarding the heat dissipation amount" includes, for example, a heat transfer coefficient and a heat dissipation amount. That is, the model generation apparatus 2 may perform machine learning on the model so as to output a heat transfer coefficient of the surface of the metal material when the flow state of the coolant on the surface of the metal material is input to the model. In addition, the model generation apparatus 2 may perform machine learning on the model so as to output a heat dissipation amount itself of the surface of the metal material when the flow state of the coolant on the surface of the metal material is input to the model. The processing (model generation step) performed by the model generation apparatus 2 and the creation of the teacher data will be described in detail later (see FIGS. 4 and 5).

Here, in the conventional technology, a heat transfer coefficient is estimated by substituting a flow rate (water amount density) of a coolant analyzed by the particle method or the like into a heat transfer coefficient estimation equation. That is, the conventional technology focuses on accurately analyzing a flow rate of a coolant on the premise that the heat transfer coefficient estimation equation is used, and does not pay attention to using two types of flow rates (in the normal direction and in the tangential direction) of the coolant as parameters.

On the other hand, in the present embodiment, a machine learning model is generated using teacher data in which two types of flow velocities of a coolant, to which no attention has conventionally been paid, are set as input values and information regarding a heat dissipation amount corresponding thereto is set as an output value. This makes it possible to accurately obtain a heat transfer coefficient without using a conventional heat transfer coefficient estimation equation.

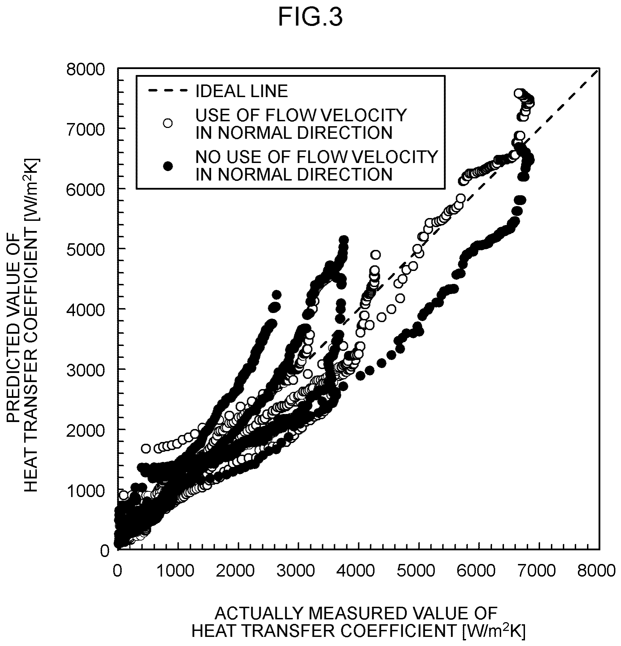

FIG. 3 illustrates a graph comparing results of predicting heat transfer coefficients between a case where the flow velocity in the normal direction of the coolant is used as teacher data for the machine learning model and a case where the flow velocity in the normal direction of the coolant is not used as teacher data for the machine learning model. In this prediction, parameters other than the flow velocity are the same.

As illustrated in FIG. 3, the root mean square error (RMSE) when the heat transfer coefficient is predicted using the flow velocity in the normal direction of the coolant is "316.12486 W/m²K". On the other hand, the RMSE when the heat transfer coefficient is predicted without using the flow velocity in the normal direction of the coolant is "477.49837 W/m²K". In this manner, it can be seen that the accuracy in predicting the heat transfer coefficient is greatly improved by using the flow velocity in the normal direction of the coolant as the teacher data.

This is presumably because the flow velocity in the normal direction tends to increase in a region immediately below the spray, where the heat transfer coefficient is large. Therefore, by adding the flow velocity in the normal direction of the coolant to the teacher data, it is possible to improve the accuracy in prediction of cooling immediately below the spray, which greatly affects an overall heat dissipation amount.

The input unit 11 is an input unit for the calculation unit 12, and is realized by an input device such as a keyboard, a mouse pointer, or a numeric keypad. The input unit 11 inputs information to be used for various processes in the calculation unit 12.

The calculation unit 12 is realized by, for example, a processor including a central processing unit (CPU) or the like and a memory (main storage unit) including a random access memory (RAM), a read only memory (ROM), or the like.

The calculation unit 12 loads a program into a work area of the main storage unit and executes the program, and controls each constituent unit and the like through the execution of the program, thereby realizing a function matching a predetermined purpose. The calculation unit 12 functions as a heat dissipation amount acquisition unit 121 and a physical quantity distribution calculation unit 122 through the execution of the program described above.

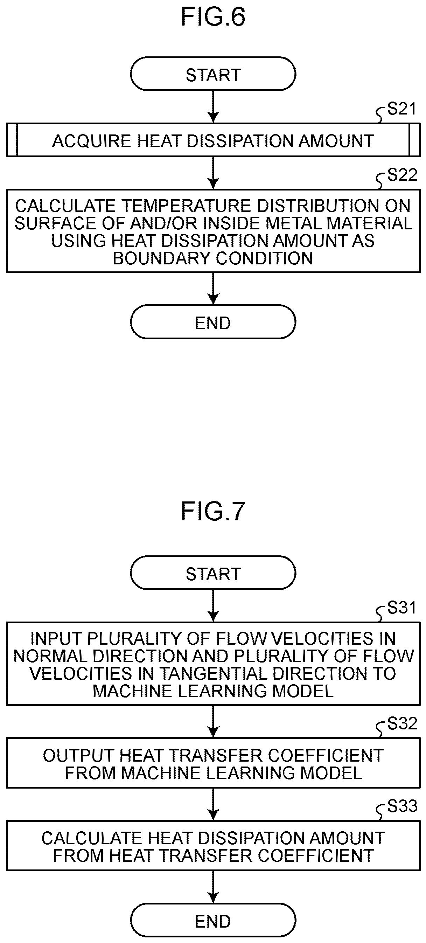

The heat dissipation amount acquisition unit 121 acquires information (heat transfer coefficient and heat dissipation amount) regarding a heat dissipation amount from the metal material by the coolant, by inputting the flow state of the coolant on the surface of the metal material to the machine learning model. For example, the heat dissipation amount acquisition unit 121 may cause the machine learning model to output a heat transfer coefficient as information regarding a heat dissipation amount, and calculate a heat dissipation amount from the heat transfer coefficient. In addition, for example, the heat dissipation amount acquisition unit 121 may cause the machine learning model to output a heat dissipation amount itself as information regarding a heat dissipation amount. The processing (the heat dissipation amount acquisition step) performed by the heat dissipation amount acquisition unit 121 will be described in detail later (see FIGS. 6 to 8).

The physical quantity distribution calculation unit 122 calculates a temperature distribution on the surface of and/or inside the metal material using the heat dissipation amount acquired by the heat dissipation amount acquisition unit 121 as a boundary condition. The processing (temperature distribution calculation step) performed by the physical quantity distribution calculation unit 122 will be described in detail later (see FIG. 6).

The output unit 13 is realized by, for example, an output device such as a display. The output unit 13 outputs a result of the calculation performed by the calculation unit 12.

### (Model Generation Method)

Processing in a machine learning model generation method (hereinafter, referred to as a "model generation method") according to the embodiment will be described with reference to FIGS. 4 and 5. In the model generation method, a teacher data creation step and a model generation step are performed.

### <Teacher Data Creation Step>

In the teacher data creation step, a data set for teacher data is prepared (step S1). The teacher data creation step will be described in detail with reference to FIG. 5.

First, a flow state of a coolant on a surface of a metal material, that is, a plurality of flow velocities in the normal direction and a plurality of flow velocities in the tangential direction on the surface of the metal material, are acquired (step S11). Subsequently, a heat transfer coefficient is calculated from a temperature actually measured when cooling the metal material (step S12). Subsequently, a heat dissipation amount is calculated from the heat transfer coefficient (step S13). Subsequently, a data set in which two types of flow velocities are input values and a heat dissipation amount is an output value is created (step S14).

Here, the flow state of the coolant, which is an explanatory variable, is acquired for each of a plurality of coordinates on the surface of the metal material. In addition, the flow state of the coolant is acquired in advance, for example, using the above-described fluid analysis method. In addition, the heat transfer coefficient, which is an objective variable, is acquired for each of the same coordinates on the surface of the metal material as those acquired for the explanatory variables. As the heat transfer coefficient, one calculated from the temperature of the metal material actually measured during cooling can be used. In addition, when measuring an actual temperature, it is preferable to use materials that are as similar as possible in composition, structure, viscosity, physical properties, etc. to the metal material and the coolant to be analyzed, and it is most preferable to use the same materials.

As described above, the flow state of the coolant, which is an explanatory variable, and the flow state of the coolant, which is an explanatory variable, are acquired for each of the same coordinates on the surface of the metal material. Therefore, the number of pieces of data input to the machine learning model and the number of pieces of data output from the machine learning model are basically the same, but the number of pieces of input data and the number of pieces of output data may be different. For example, by inputting flow states of the coolant for a plurality of coordinates on the surface of the metal material to the machine learning model, a heat transfer coefficient for one region on the surface of the metal material in which the plurality of coordinates are integrated may be output from the machine learning model. In this manner, it is also possible to appropriately change the number of pieces of input/output data in the machine learning model for reducing the calculation load or depending on the required accuracy. Referring back to FIG. 4, the description will be continued.

### <Model Generation Step>

In the model generation step, machine learning is performed using teacher data such that, when a flow state of a coolant on a surface of a metal material is input as an input value, information (heat transfer coefficient and heat dissipation amount) regarding a heat dissipation amount from the metal material by the coolant is output as an output value. As a result, a machine learning model is generated (step S2). By performing the processing as described above, it is possible to construct a machine learning model by combining a result of measuring a temperature of the metal material that has actually been cooled or is being cooled with a fluid analysis that reproduces the flow state of the coolant during this cooling process.

Here, the machine learning method in the model generation step is not particularly limited, but is desirably a method capable of taking into account the nonlinearity of the flow state and the boiling form of the coolant. Examples of such a method include a neural network and a gradient boosting decision tree. On the other hand, examples of the linearity prediction method include single regression, multiple regression, and simple relational expression, but these are not used in the model generation step.

Furthermore, in the present embodiment, the case in which the machine learning model is used has been described, but a model using a database (hereinafter, referred to as a "database model") may be used. In this case, the database model is constructed in the model generation step after sufficient data is prepared in advance so that the nonlinearity of the flow state and the boiling form of the coolant can be taken into account.

### (Temperature Distribution Estimation Method)

Processing in a temperature distribution estimation method for metal material according to the embodiment will be described with reference to FIGS. 6 to 8. In the temperature distribution estimation method, a heat dissipation amount acquisition step and a temperature distribution calculation step are performed.

### <Heat Dissipation Amount Acquisition Step>

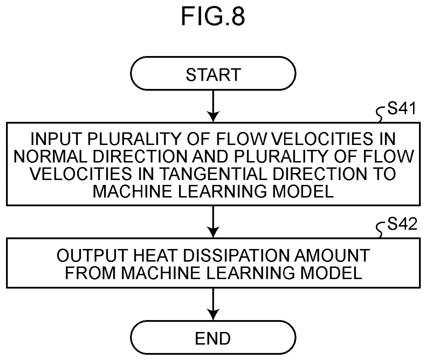

In the heat dissipation amount acquisition step, a heat dissipation amount when the metal material is cooled by the coolant is acquired using the machine learning model created in advance (step S21). In the heat dissipation amount acquisition step, the heat dissipation amount can be acquired by a plurality of methods depending on how the machine learning model is trained. Hereinafter, the heat dissipation amount acquisition step will be described in detail with reference to FIGS. 7 and 8.

In a method illustrated in FIG. 7, first, a flow state (e.g., a plurality of flow velocities in the normal direction and a plurality of flow velocities in the tangential direction) of the coolant on the surface of the metal material is input to the machine learning model (step S31). As a result, a heat transfer coefficient is output from the machine learning model (step S32). Then, a heat dissipation amount when the metal material is cooled by the coolant is calculated from the heat transfer coefficient (step S33). In this manner, in the present method, the machine learning model subjected to machine learning using teacher data is used such that, when a flow state of a coolant on a surface of a metal material is input as an input value, a heat transfer coefficient of the metal material by the coolant is output as an output value.

In a method illustrated in FIG. 8, first, a flow state (e.g., a plurality of flow velocities in the normal direction and a plurality of flow velocities in the tangential direction) of the coolant on the surface of the metal material is input to the machine learning model (step S41). As a result, a heat dissipation amount is output from the machine learning model (step S42). In this manner, in the present method, the machine learning model subjected to machine learning using teacher data is used such that, when a flow state of a coolant on a surface of a metal material is input as an input value, a heat dissipation amount from the metal material by the coolant is output as an output value. Referring back to FIG. 6, the description will be continued.

### <Temperature Distribution Calculation Step>

In the temperature distribution calculation step, a temperature distribution on the surface of and/or inside the metal material is calculated using the heat dissipation amount as a boundary condition (step S22). In the temperature distribution calculation step, for example, the surface and/or the inside of the metal material for which a temperature distribution is to be estimated is discretized using a lattice, and a temperature distribution is calculated by solving a heat conduction equation at each calculation point (that is, by performing a heat transfer analysis). In this case, instead of directly solving the heat conduction equation, a relational expression created using a result of solving the heat conduction equation, a model that has been subjected to machine learning using a result of solving the heat conduction equation, or the like may be used.

In the calculation of the temperature distribution, the methods, such as explicit and implicit methods and steady and unsteady calculations, are not particularly limited. Since a heat dissipation amount is calculated at each coordinate on the surface of the metal material, the heat dissipation amount at any surface coordinate can be obtained by linear interpolation. By performing the above-described processing, a temperature distribution on the surface of and/or inside the metal material can be estimated.

The temperature distribution estimation method for metal material according to the embodiment described above is capable of estimating a temperature distribution of the metal material during cooling using a spray nozzle with high accuracy. This is because a heat dissipation amount to be used in the temperature distribution calculation step can be accurately obtained by using two types of flow velocities (in the normal direction and in the tangential direction) of the coolant, to which no attention has conventionally been paid, as parameters, and obtaining information regarding a heat dissipation amount corresponding thereto. In addition, the machine learning model generation method according to the embodiment is capable of constructing a machine learning model for estimating a temperature distribution during cooling of a metal material using a spray nozzle with high accuracy.

### (Application Example 1: Continuous Casting Condition Setting Method)

The temperature distribution estimation method for metal material according to the embodiment can be applied to a continuous casting condition setting method. In this case, a temperature distribution of a cast piece during secondary cooling when a steel material is continuously cast is estimated using the temperature distribution estimation method for metal material according to the embodiment, and a continuous casting condition is set based on the estimated temperature distribution of the cast piece. Hereinafter, a specific example of the continuous casting condition setting method according to the embodiment will be described.

First, a machine learning model is created in advance, the machine learning model outputting a heat dissipation amount from a metal material by a coolant as an output value when a flow state of the coolant obtained through a fluid analysis is input as an input value. Here, a heat transfer coefficient, which is an objective variable, is collected through a cooling experiment on the steel sheet, and a flow state of the coolant, which is an explanatory variable, is collected through a flow analysis of the coolant that reproduces the heat transfer coefficient.

A flow of the cooling experiment on the steel sheet will be described. First, a steel sheet in which a plurality of thermocouples are embedded is heated to 950°C in a furnace. Subsequently, the heated steel sheet is taken out from the furnace and moved to the front of the spray nozzle for cooling. At this time, a dummy roll is installed on the steel sheet in order to bring the cooling situation closer to the actual state. When the movement of the steel sheet is completed and the steel sheet is fixed, a coolant is sprayed from the spray nozzle to cool the steel sheet. During cooling, the temperature of the steel sheet is acquired from the thermocouples every 0.1 seconds. This experiment is performed for each of the plurality of spray nozzle arrangements and for each flow rate.

As a result, it is possible to acquire a temperature history at each coordinate of the steel sheet during cooling for each spray nozzle arrangement and for each flow rate. Subsequently, the temperature history of the steel sheet is converted into a heat transfer coefficient history. This conversion into the heat transfer coefficient history was performed through a onedimensional unsteady heat transfer analysis in the thickness direction of the steel sheet. Then, the temperatures of the steel sheet obtained through the analysis and the measurement are compared every 0.1 seconds, and a heat transfer coefficient by cooling the spray nozzle is determined so that the difference is sufficiently small.

The flow analysis of the coolant was performed using the SPH method, which is a type of particle method. Using the steel sheet used in the cooling experiment as a wall boundary condition, the coolant discretized by SPH particles was sprayed from the position where the spray nozzle was arranged. Then, an unsteady analysis was performed until the flow of the coolant on the steel sheet became steady, and an average value of the flow state for 10 seconds was acquired. In the analysis using the SPH method, a density, a flow velocity, a pressure, the number of neighboring particles, etc. for each particle can be obtained. These were ensemble averaged for a plurality of particles in the vicinity of the temperature measurement position in the cooling experiment, and used as flow state parameters.

A learning data set (teacher data) was created using the heat transfer coefficient obtained in the above-described cooling experiment as an objective variable and the flow state parameters obtained in the flow analysis of the coolant plus the steel sheet temperature obtained in the cooling experiment as explanatory variables. 10% of the learning data set is used as verification data, and the remaining 90% is used as learning data. However, if the data set is directly divided by random numbers, the prediction accuracy is estimated to be high because data of the same measurement point exists as verification data and as learning data. Therefore, in order to handle unknown data, data was grouped for each temperature measurement point, and data of the same group was not divided.

As a machine learning method, a gradient boosting decision tree was used. At that time, parameter tuning was performed by Bayesian optimization. Subsequently, by inputting the flow state of the coolant on the surface of the metal material obtained by the fluid analysis to the constructed machine learning model, a heat transfer coefficient corresponding thereto was acquired, and the heat transfer coefficient was converted to calculate a heat dissipation amount. Note that a heat dissipation amount may be directly obtained without using the heat transfer coefficient by setting the objective variable of the machine learning model to the heat dissipation amount. The creation of the machine learning model in advance is completed by the above-described procedure.

Subsequently, a flow state of a coolant on a surface of a target cast piece is analyzed. Here, flow state parameters output as a result are input to the machine learning model created in advance, and thus, the same parameters as those used in the learning are used. Therefore, in this case as well, the flow state of the coolant on the surface of the cast piece is analyzed by the SPH method, similarly to the time when the learning data is created.

The flow of the analysis using the SPH method was also similar to that when the learning data is created, and the coolant discretized by the SPH particles was sprayed from the position where the spray nozzle of the actual machine was arranged, and an unsteady analysis was performed until the flow of the coolant on the cast piece became steady, and an average value of the flow state for 10 seconds was acquired. In addition, a plurality of coordinates for obtaining the flow state of the coolant were set on the surface of the cast piece, and numerical values of arbitrary coordinates could be obtained by linear interpolation.

Subsequently, a heat dissipation amount from the cast piece by the coolant is calculated. A heat transfer coefficient at each coordinate of the cast piece is acquired by inputting the flow state at each coordinate of the cast piece obtained in the previous step and arbitrary temperature data to the machine learning model created in advance. For the temperature data, a numerical range observed during actual operation was divided at equal intervals. Here, the range of 100°C to 1500°C was input in increments of 5°C. Then, by associating the obtained heat transfer coefficient data with the coordinates and the temperature of the input data, a table (heat transfer coefficient prediction table) in which a heat transfer coefficient can be predicted by linear interpolation from the x and y coordinates and the temperature on the surface of the cast piece is created.

Finally, a temperature distribution on the surface of and/or inside the cast piece is estimated by heat transfer analysis using the heat transfer coefficient prediction table. The heat transfer analysis method was a steady-state analysis using an implicit method, and the casting speed was modeled as advection. For the cooled surface, the boundary condition was a heat transfer coefficient acquired from the heat transfer coefficient prediction table, and for the uncooled surface, the natural radiation condition based on Stefan-Boltzmann's law was applied. By performing this analysis until convergence, a temperature distribution on the surface of and/or inside the cast piece can be estimated. The temperature distribution obtained as described above precisely indicates a heat dissipation amount due to the nonlinear fluid behavior of the coolant on the surface of the cast piece by using two types of flow velocities (in the normal direction and in the tangential direction) of the coolant as parameters, resulting in a highly accurate value close to the actual phenomenon.

### (Application Example 2: Continuous Casting Process Developing Method)

The temperature distribution estimation method for metal material according to the embodiment can be applied to a continuous casting process developing method. In this case, a temperature distribution of a cast piece during secondary cooling when a steel material is continuously cast is estimated using the temperature distribution estimation method for metal material, and a continuous casting process is developed based on the estimated temperature distribution of the cast piece.

In the continuous casting process developing method, conditions of various facilities and the like when a new continuous casting machine is developed can be determined based on, for example, the temperature distribution of the cast piece estimated by the temperature distribution estimation method for metal material. Examples of the conditions of the various facilities include a position of the spray nozzle, whether or not spray width cutting is required, a flow rate and a flow velocity of the coolant, a casting speed (conveying speed) of the cast piece, and a position of a roll chock.

### (Application Example 3: Continuous Casting Process Controlling Method and Cast Piece Manufacturing Method)

The temperature distribution estimation method for metal material according to the embodiment can be applied to a continuous casting process controlling method. In this case, a cast piece is manufactured by estimating a temperature distribution of a cast piece during secondary cooling when a steel material is continuously cast using the temperature distribution estimation method for metal material, and performing a feedback control using control parameters in the continuous casting based on the estimated temperature distribution of the cast piece.

In the continuous casting process controlling method, it is possible to monitor and control the flow rate of the coolant and other operating conditions in real time or with a short time lag when the cast piece is manufactured. For example, during secondary cooling when a cast piece is continuously cast, in order to constantly maintain the temperature of the cast piece in a desired distribution, the flow rate of the coolant from the spray nozzle, whether or not width cutting is performed, the casting speed, etc. are control parameters.

Therefore, a feedback control is performed with these parameters based on the temperature distribution of the cast piece estimated by the temperature distribution estimation method for metal material. However, since the flow state of the coolant on the surface of the cast piece cannot be acquired in real time or with a short time lag, it is preferable to obtain the flow state for each flow rate of the coolant and under each operating condition in advance through a numerical analysis or the like. Then, the input to the machine learning model is performed with reference to the flow state of the coolant calculated in advance based on the flow rate of the coolant and other operating conditions in the actual machine. By performing such processing, it is possible to estimate an uneven temperature distribution in the width direction in the continuous casting of the cast piece, and accordingly, it is possible to suppress an occurrence of a defect such as a short side crack by changing the flow rate of the coolant and the position of the spray based on the estimation result.

### (Application Example 4: Hot Rolling Condition Setting Method)

The temperature distribution estimation method for metal material according to the embodiment can be applied to a hot rolling condition setting method. In this case, a temperature distribution of a steel sheet in rapid cooling during the hot rolling of the steel sheet is estimated using the temperature distribution estimation method for metal material, and a hot rolling condition is set based on the estimated temperature distribution of the steel sheet.

### (Application Example 5: Hot Rolling Process Developing Method)

The temperature distribution estimation method for metal material according to the embodiment can be applied to a hot rolling process developing method. In this case, a temperature distribution of a steel sheet in rapid cooling during the hot rolling of the steel sheet is estimated using the temperature distribution estimation method for metal material, and a hot rolling process is developed based on the estimated temperature distribution of the steel sheet.

### (Application Example 6: Temperature Distribution Estimation Method for Slag)

Slag, which is a steel by-product, may be reused for a roadbed material or the like. However, the slag immediately after being discharged is in a high temperature state of 1,000°C or higher, and is cooled with water spray or the like in order to suppress spontaneous ignition or the like. Since the temperature distribution of the slag heap in the cooling process affects the quality of the slag after being cooled, estimation using a trained model, a numerical analysis, or the like is very useful for grasping the temperature distribution.

The temperature distribution estimation method for metal material according to the embodiment can be applied to a temperature distribution estimation method in a case where a slag heap is cooled. Unlike general metal materials, the slag heap does not have a flat surface shape (has irregularities), and thus it is difficult to calculate two types of flow velocities (in the normal direction and in the tangential direction) of the coolant. Therefore, a normal vector is calculated from the curvature of each curved surface of the slag heap, and a flow velocity of the coolant is decomposed in the normal direction and the tangential direction of the slag heap surface. By using them as flow state parameters, the temperature distribution of the slag can be estimated.

### [Second Embodiment]

### (Solidification Distribution Estimation Method)

Processing in a solidification distribution estimation method for metal material according to an embodiment will be described. In the temperature distribution estimation method described above, a temperature distribution is estimated as a physical quantity, whereas in the solidification distribution estimation method, a solidification distribution is estimated as a physical quantity. In the solidification distribution estimation method, a heat dissipation amount acquisition step and a solidification distribution calculation step are performed.

### <Heat Dissipation Amount Acquisition Step>

In the heat dissipation amount acquisition step, the heat dissipation amount acquisition unit 121 acquires a heat dissipation amount when the metal material is cooled by the coolant using the machine learning model created in advance. In the heat dissipation amount acquisition step, as in FIG. 7, a heat transfer coefficient may be output from the machine learning model, and a heat dissipation amount may be calculated from the heat transfer coefficient. In the heat dissipation amount acquisition step, a heat dissipation amount may be directly output from the machine learning model as in FIG. 8.

### <Solidification Distribution Calculation Step>

In the solidification distribution calculation step, the physical quantity distribution calculation unit 122 calculates a solidification distribution (three-dimensional solidification distribution) on the surface of and/or inside the metal material using the heat dissipation amount as a boundary condition. In the solidification distribution calculation step, for example, the surface and/or the inside of the metal material for which a solidification distribution is to be estimated is discretized using a lattice, and a solidification distribution is calculated by solving a heat conduction equation at each calculation point (by performing a heat transfer analysis). In this case, instead of directly solving the heat conduction equation, a relational expression created using a result of solving the heat conduction equation, a model that has been subjected to machine learning using a result of solving the heat conduction equation, or the like may be used. In addition, in the heat transfer analysis, a solidification distribution is calculated by setting a flag at a calculation point at which solidification is determined in consideration of latent heat when metal changes from a solid to a liquid.

In the heat transfer analysis in the solidification distribution calculation step, for example, the following physical quantities are input.
· Boundary condition: heat dissipation amount distribution on metal surface (two-dimensional)
· Initial condition: Initial temperature distribution inside metal (three-dimensional)
· Initial condition: Initial solidification distribution inside metal (three-dimensional)
· Physical property value of metal (e.g., heat conduction, density, specific heat, latent heat of solidification, etc.)
· Analysis time T

In addition, in the heat transfer analysis in the solidification distribution calculation step, for example, the following physical quantities are output.
· Temperature distribution inside metal after T elapses (three-dimensional)
· Solidification distribution inside metal after T elapses (three-dimensional)

Then, in the heat transfer analysis in the solidification distribution calculation step, for example, a solidification distribution inside the metal material is calculated by the following procedure.
(1) The boundary condition, the initial condition, the physical property value, and the analysis time are set.
(2) A heat conduction equation is calculated at each calculation point of the metal material, and a temperature distribution inside the metal and a solidification distribution inside the metal are sequentially updated (loop processing is performed until T elapses).
(3) When the calculation is completed, the temperature distribution inside the metal and the solidification distribution inside the metal are output.

In the solidification distribution calculation step, the solidification distribution of the metal material is calculated together with the temperature distribution of the metal material. In addition, in the solidification distribution calculation step, a value indicating solidification at each calculation point is output as, for example, a value of 0 to 1, and the solidification distribution is output as a map or the like in which each value is indicated by a color.

The solidification distribution estimation method for metal material according to the embodiment described above is capable of estimating a solidification distribution of the metal material during cooling with high accuracy. In addition, the solidification distribution estimation method for metal material according to the embodiment can be effectively used particularly for estimating a solidification distribution when a cast piece is manufactured.

Although the method for estimating a physical quantity distribution of an object, the method for manufacturing an object, the method for setting a manufacturing condition, the method for developing a manufacturing process, the method for generating a machine learning model, the program for estimating a physical quantity distribution of an object, and the apparatus for estimating a physical quantity distribution of an object according to the present invention have been specifically described by the embodiments and examples for carrying out the invention, the gist of the present invention is not limited to these descriptions, and should be broadly construed based on the description of the claims. It goes without saying that various changes, modifications, and the like based on these descriptions also fall within the gist of the present invention.

### Reference Signs List

- 1: TEMPERATURE DISTRIBUTION ESTIMATION APPARATUS

- 11: INPUT UNIT
- 12: CALCULATION UNIT
- 121: HEAT DISSIPATION AMOUNT ACQUISITION UNIT
- 122: PHYSICAL QUANTITY DISTRIBUTION CALCULATION UNIT
- 13: OUTPUT UNIT
- 2: MODEL GENERATION APPARATUS

## Claims

1. A method for estimating a physical quantity distribution of an object when a coolant is sprayed from a spray nozzle to cool the object, the method comprising:
a heat dissipation amount acquisition step of acquiring information regarding a heat dissipation amount from the object by the coolant by inputting a plurality of flow velocities of the coolant in a normal direction with respect to the object and a plurality of flow velocities of the coolant in a tangential direction with respect to the object to a machine learning model; and
a physical quantity distribution calculation step of calculating a physical quantity distribution of at least one of a surface of the object and inside the object, using the heat dissipation amount as a boundary condition.

2. The method for estimating the physical quantity distribution of the object according to claim 1, wherein in the heat dissipation amount acquisition step, a heat transfer coefficient is output from the machine learning model as the information regarding the heat dissipation amount, and the heat dissipation amount is calculated from the heat transfer coefficient.

3. The method for estimating the physical quantity distribution of the object according to claim 1 or 2, wherein the machine learning model is trained by performing machine learning using teacher data such that, when the plurality of flow velocities of the coolant in the normal direction with respect to the object and the plurality of flow velocities of the coolant in the tangential direction with respect to the object are input as input values, the information regarding the heat dissipation amount from the object by the coolant is output as an output value.

4. The method for estimating the physical quantity distribution of the object according to any one of claims 1 to 3, wherein the physical quantity is a temperature or a solidification.

5. A method for manufacturing an object, the method comprising: estimating a physical quantity distribution of the object in a predetermined step using the method for estimating the physical quantity distribution of the object according to any one of claims 1 to 4; and controlling a manufacturing parameter related to manufacturing of the object based on the estimated physical quantity distribution of the object.

6. A method for setting a manufacturing condition for one or more predetermined steps included in a manufacturing method for manufacturing an object, the method comprising:
estimating a physical quantity distribution of the object in the predetermined steps using the method for estimating the physical quantity distribution of the object according to any one of claims 1 to 4; and setting a manufacturing condition for the predetermined steps based on the estimated physical quantity distribution of the object.

7. A method for developing a manufacturing process for one or more predetermined steps included in a manufacturing method for manufacturing an object, the method comprising:
estimating a physical quantity distribution of the object in the predetermined steps using the method for estimating the physical quantity distribution of the object according to any one of claims 1 to 4; and developing a manufacturing process for the predetermined steps based on the estimated physical quantity distribution of the object.

8. A method for generating a machine learning model, comprising:
by using teacher data in which a plurality of flow velocities of a coolant for cooling an object in a normal direction with respect to the object and a plurality of flow velocities of the coolant for cooling the object in a tangential direction with respect to the object are set as input values, and information regarding a heat dissipation amount from the object by the coolant is set as an output value,
generating, by machine learning, a model in which the plurality of flow velocities of the coolant in the normal direction with respect to the object and the plurality of flow velocities of the coolant in the tangential direction with respect to the object are used as input values and the information regarding a heat dissipation amount from the object by the coolant is used as an output value.

9. A program for estimating a physical quantity distribution of an object when a coolant is sprayed from a spray nozzle to cool the object, the program causing a computer to function as:
a heat dissipation amount acquisition unit configured to acquire information regarding a heat dissipation amount from the object by the coolant by inputting a plurality of flow velocities of the coolant in a normal direction with respect to the object and a plurality of flow velocities of the coolant in a tangential direction with respect to the object to a machine learning model; and
a physical quantity distribution calculation unit configured to calculate a physical quantity distribution of at least one of a surface of the object and inside the object, using the heat dissipation amount as a boundary condition.

10. An apparatus for estimating a physical quantity distribution of an object when a coolant is sprayed from a spray nozzle to cool the object, the apparatus comprising:
a heat dissipation amount acquisition unit including a machine learning model, and configured to acquire information regarding a heat dissipation amount from the object by the coolant by inputting a plurality of flow velocities of the coolant in a normal direction with respect to the object and a plurality of flow velocities of the coolant in a tangential direction with respect to the object to the machine learning model; and
a physical quantity distribution calculation unit configured to calculate a physical quantity distribution of at least one of a surface of the object and inside the object, using the heat dissipation amount as a boundary condition.

11. The apparatus for estimating the physical quantity distribution of the object according to claim 10, wherein the physical quantity is a temperature or a solidification.
